# EUROPÄISCHE PATENTSCHRIFT

(11) **EP 1 079 154 B1**
(45) Veröffentlichungstag und Bekanntmachung des Hinweises auf die Patenterteilung: **01.10.2003**
(21) Anmeldenummer: 00118352.4
(22) Anmeldetag: 24.08.2000
(51) Int. Cl.: F16H 63/32

(54) **Schaltschiene mit daran befestigter Schaltgabel für Kraftfahrzeug-Schaltgetriebe**
Selecting shaft with attached shifting fork for a vehicle transmission
Arbre et fourchette de commande d'une transmission pour véhicules, dont la fourchette est attachée sur l'arbre

(30) Priorität: 27.08.1999 DE 19940628
(43) Veröffentlichungstag der Anmeldung: 28.02.2001
(73) Patentinhaber: SELZER FERTIGUNGSTECHNIK GMBH & CO., 35759 Driedorf-Roth (DE)
(72) Erfinder: Volk, Matthias, Dipl.-Ing. (FH), 35625 Hütttenberg (DE); Kühnke, Roland, Dipl.-Ing. (BA), 35745 Herborn-Seelbach (DE)
(74) Vertreter: Oppermann, Mark, Dipl.-Ing.

(56) Entgegenhaltungen:
- EP-A- 0 332 442
- CH-A- 535 394
- DE-U- 9 320 598
- US-A- 1 594 571
- US-A- 5 027 672
- PATENT ABSTRACTS OF JAPAN vol. 1998, no. 13, 30. November 1998 (1998-11-30) & JP 10 220577 A (SUZUKI MOTOR CORP;KOORITSU:KK), 21. August 1998 (1998-08-21)
- PATENT ABSTRACTS OF JAPAN vol. 007, no. 082 (P-189), 6. April 1983 (1983-04-06) & JP 58 010221 A (KUBOTA TEKKOSHO:KK), 20. Januar 1983 (1983-01-20)
- PATENT ABSTRACTS OF JAPAN vol. 1997, no. 11, 28. November 1997 (1997-11-28) -& JP 09 196167 A (AISIN EE I KK), 29. Juli 1997 (1997-07-29)

## Beschreibung

Die Erfindung bezieht sich auf eine Schaltschiene mit daran befestigter Schaltgabel für Kraftfahrzeug-Schaltgetriebe und schließt auch ein Verfahren zur Herstellung der Schaltschiene mit daran befestigter Schaltgabel ein.

Schaltschienen mit daran starr befestigter Schaltgabel für Kraftfahrzeug-Schaltgetriebe sind im Stand der Technik hinlänglich bekannt (z.B. DE-U-93 20 598). Bei diesem Stand der Technik ist aus einer Schaltschiene aus Flachmaterial eine Öffnung zur festen Aufnahme einer Buchse herausgeformt, welche eine Axialbohrung aufweist, in die die Schaltgabel mit einem Einsatz eingesetzt ist. Die Buchse hat ferner eine Querbohrung zur Aufnahme eines Fixierelements, beispielsweise eines Stiftes für den Einsatz der Schaltgabel.

Bei den hier in Rede stehenden Anordnungen aus Schaltschiene und Schaltgabel jedoch sorgt ein rechtwinklig zur Schaltschienenachse gerichteter Schwenkzapfen, der Schaltgabel und Schaltschiene in Richtung der Schaltschienenachse relativ zueinander unverschiebbar festlegt, für ein geringes zulässiges Schwenkwinkelspiel um etwa 1 bis 2°, um im Betrieb auftretende Taumelbewegungen der Schaltmuffe, in welche die Schaltgabel mit ihren Gabelenden eingreift, auszugleichen und somit die Übertragung von Schwingungen in das Schaltgestänge zu vermeiden.

Würde eine Winkelverschwenkbarkeit der Schaltgabel beim Stand cer Technik gemäß DE-U-93 20 598 vorgesehen werden, müßten, um eine einwandfreie Funktion einer solchen Anordnung aus Schaltschiene und Schaltgabel zu gewährleisten, enge Maßtoleranzen für die Längenmaße in Richtung der Achse der Schaltschiene eingehalten werden. Insbesondere wären enge Toleranzen für die axialen Abstandsmaße zwischen den an der Schaltschiene anzubringenden Mitnehmerflächen und der in die Schaltschiene einzubringenden Axialbohrung für den Schaltgabeleinsatz, aber auch zwischen der Axialbohrung, den Mitnehmerflächen und den an der Schaltschiene anzubringenden Schaltrasten einzuhalten. Bei Anbringung der Axialbohrung für den Schaltgabeleinsatz in einem zusätzlichen Drehteil, wie der Buchse, könnten sich Abweichungen in den Längenmaßen noch addieren. Auch funktionsbeeinträchtigende Winkelfehler bzw. -toleranzen zwischen der Schaltschienenachse und der Schaltgabelmittelebene könnten auftreten.

Der Erfindung liegt die Aufgabe zugrunde, eine die Übertragung von Schwingungen in das Schaltgestänge vermeidende Schaltschiene mit daran befestigter Schaltgabel bereitzustellen, welche bei kostengünstiger Herstellbarkeit die Einhaltung geringer Toleranzen ermöglicht.

Die gestellte Aufgabe wird erfindungsgemäß durch die im Patentanspruch 1 angegebenen Merkmale gelöst. Vorteilhafte bzw. zweckmäßige Weiterbildungen der Erfindung gehen aus den Patentansprüchen 2 bis 8 hervor. Ein bevorzugtes Herstellungsverfahren ergibt sich aus dem Patentanspruch 9.

Nach der Lehre des Patentanspruchs 1 sind die Schaltgabel und die Schaltschiene durch einen rechtwinklig zur Schaltschienenachse gerichteten Schwenkzapfen in Richtung der Schaltschienenachse relativ zueinander unverschiebbar festgelegt, wobei jedoch die Schaltgabel um den Schwenkzapfen um einen geringen Winkelbetrag relativ zur Schaltschiene verschwenkbar ist, so daß die Übertragung von Schwingungen in das Schaltgestänge vermieden wird. Dabei ist an die Schaltgabel ein Aufnahmevorsprung für die Aufnahme der Schaltschiene angeformt, der eine Öffnung mit zwei gegenüberliegenden zueinander planparallelen Führungsflächen aufweist, welche die Schaltgabel verschwenkbar um den durch den Aufnahmevorsprung senkrecht zu den Führungsflächen und durch die Schaltschiene hindurchgeführten Schwenkzapfen an der Schaltschiene führen.

Nach einem Grundgedanken der Erfindung wird die Schaltgabel also über ihren Aufnahmevorsprung mit der Schaltschiene über einen Schwenkzapfen vereinigt, der sowohl durch eine Bohrung des Aufnahmevorsprungs als auch durch eine entsprechende Bohrung der Schaltschiene hindurchgeführt ist. Auf diese Weise lassen sich auch die erwähnten engen Maßtoleranzen ohne erheblichen Fertigungsaufwand leicht erzielen, insbesondere wenn die Bohrung im Aufnahmevorsprung und die Bohrung in der Schaltschiene in gegenseitig justierter Lage von Schaltgabel und Schaltschiene gemeinsam durch einen Bohrvorgang angebracht sind.

Die Öffnung des Aufnahmevorsprungs kann gemäß Anspruch 2 ein offener Schlitz sein, wodurch ein Aufstecken des Aufnahmevorsprungs auf die Schaltschiene in Querrichtung zu dieser ermöglicht wird. Der Aufnahmevorsprung kann entsprechend Anspruch 3 aber auch als umfänglich geschlossene Hülse ausgebildet sein, so daß die Schaltgabel axial auf die Schaltschiene aufzuschieben ist. Schließlich kann zwischen dem Aufnahmevorsprung und der Schaltschiene nach Anspruch 4 eine Führungsbuchse od.dgl. angeordnet sein, die ihrerseits entsprechend Anspruch 5 durch entsprechende Formgebung für seitliches Aufstecken auf die Schaltschiene ausgebildet sein kann. In allen diesen Fällen sind auf die in den Ansprüchen angegebene Weise Schwenkspielabstände vorgesehen, um die beschriebene Verschwenkbarkeit zwischen Schaltgabel und Schaltschiene zu ermöglichen.

Die erfindungsgemäßen Maßnahmen lassen sich entsprechend Anspruch 6 an einer als Rundstab ausgebildeten Schaltschiene realisieren, wenn diese auf die angegebene Weise mit gegenüberliegenden Abflachungen versehen ist, die mit den planparallelen Führungsflächen an der Schaltgabel, d.h. des Aufnahmevorsprungs bzw. der Führungsbuchse im Aufnahmevorsprung zusammenwirken. Die Schaltschiene kann aber auch kostengünstig aus Flachmaterial geschnitten sein, wie das in Anspruch 7 angegeben ist, zumal hierbei auch die Mitnehmerflächen und die Schaltrasten bei der Herstellung der Schaltschiene maßgenau angebracht werden können.

Die Schaltgabel muß nicht in ihrem Aufnahmevorsprung die Schaltschiene unmittelbar aufnehmen. Mit der Schaltschiene kann auch ein Element fest verbunden sein, an welches der Aufnahmevorsprung angreift. Dieses kann beispielsweise durch die Anordnung eines U-förmigen Bügels an der Schaltschiene realisiert sein, wie das im Anspruch 8 angegeben ist. Hierdurch läßt sich der gegenseitige Abstand von Schaltschiene und Schaltgabel ohne Beeinträchtigung der Maßtoleranzen konstruktiv vergrößern, was für die Ausbildung des Getriebes und/oder seines Gehäuses von Vorteil sein kann.

Die erfindungsgemäße Schaltschiene mit daran befestigter Schaltgabel wird vorzugsweise entsprechend dem in Anspruch 9 angegebenen Verfahren hergestellt. Hierbei werden nach genauer gegenseitiger Ausrichtung von Schaltgabel und Schaltschiene, die leicht mit einer entsprechend ausgebildeten Aufnahme an einer Bohrvorrichtung erreichbar ist, Schaltgabel und Schaltschiene zur Erzeugung der Aufnahmebohrung für den Schwenkzapfen gemeinsam in einem Bohrvorgang gebohrt. Es ist ersichtlich, daß so die beschriebenen Maßtoleranzen auf herstellungstechnisch einfache Weise klein gehalten werden können.

Weitere Einzelheiten der Erfindung werden nachfolgend unter Bezugnahme auf die Ausführungsbeispiele in unterschiedlichen Maßstäben darstellenden Zeichnungen näher erläutert. Darin zeigen:
- Fig. 1: eine Hauptansicht einer Schaltgabel mit einer ersten Ausführungsform ihres Aufnahmevorsprungs,
- Fig. 2: die Vorderansicht der Schaltgabel gemäß Fig. 1,
- Fig. 3: eine teilweise geschnittene und aufgebrochene Hauptansicht der Schaltgabel gemäß den Figuren 1 und 2 nach ihrer Vereinigung mit einer Schaltschiene in ihrer ersten Ausführungsform,
- Fig. 4: eine Teilschnittansicht der Schaltgabel und Schaltschiene entsprechend der Schnittverlaufslinie IV-IV in Fig. 3, worin die Grenzlagen des möglichen Verschwenkweges schematisch angedeutet sind,
- Fig. 5: einen Schnitt durch eine zweite Ausführungsform des Aufnahmevorsprungs der Schaltgabel und durch die damit vereinigte Schaltschiene,
- Fig. 6: einen Schnitt durch eine dritte Ausführungsform des Aufnahmevorsprungs der Schaltgabel und durch die damit vereinigte Schaltschiene mit eingesetzter Führungsbuchse,
- Fig. 7: die Draufsicht auf eine Schaltschiene in ihrer zweiten Ausführungsform und auf eine damit vereinigte Schaltgabel mit einer der ersten Ausführungsform ähnlichen Ausbildung des Aufnahmevorsprungs,
- Fig. 8: eine Schnittansicht der Schaltschiene mit daran befestigter Schaltgabel entsprechend der Schnittverlaufslinie VIII-VIII in Fig. 7,
- Fig. 9: die Draufsicht auf eine Schaltschiene in ihrer dritten Ausführungsform und auf eine damit vereinigte Schaltgabel mit der Ausbildung des Aufnahmevorsprungs gemäß Fig. 7 und
- Fig. 10: eine Schnittansicht der Schaltschiene mit daran befestigter Schaltgabel entsprechend der Schnittverlaufslinie X-X gemäß Fig. 9.

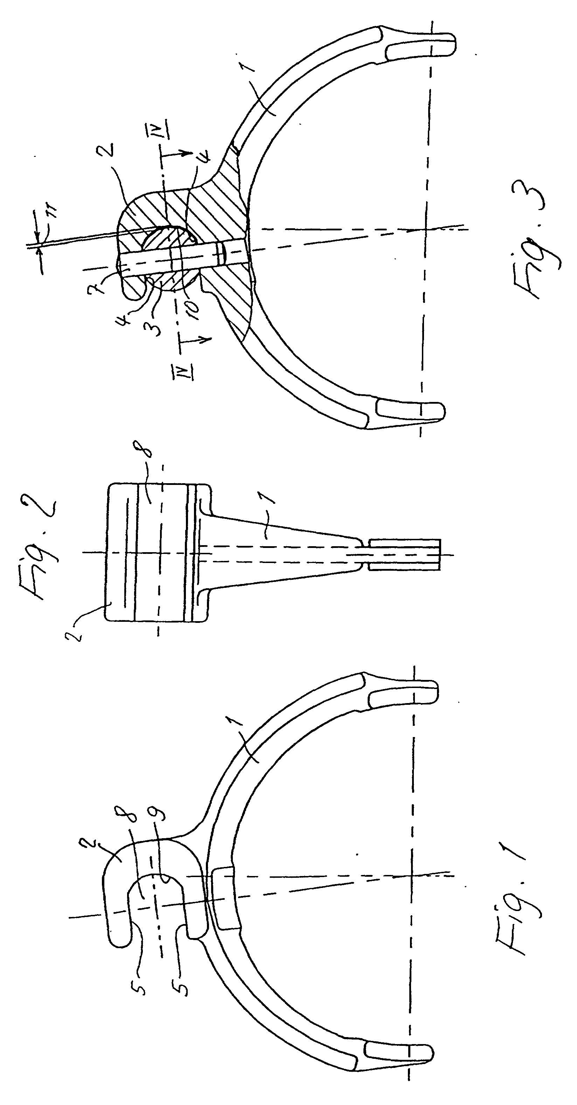

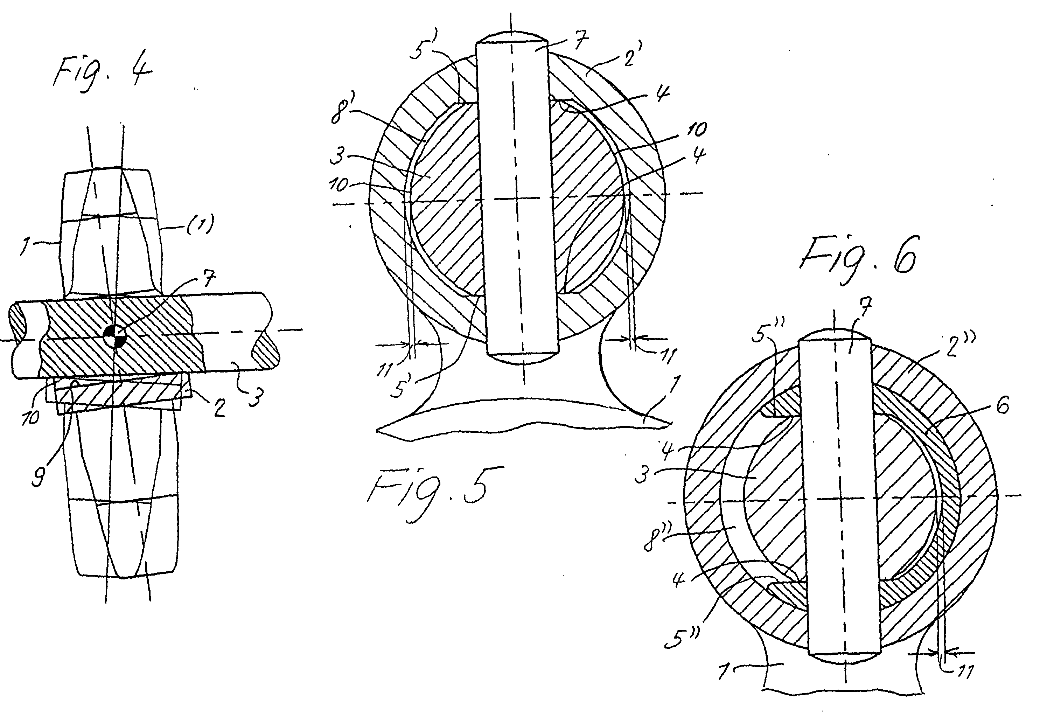

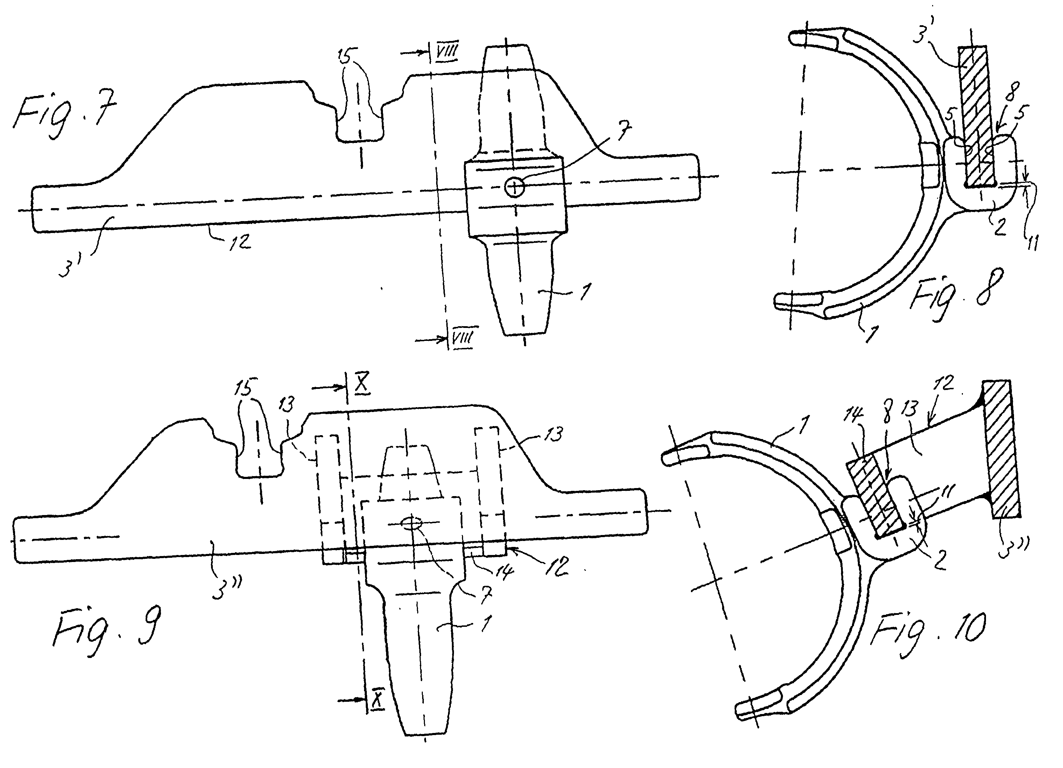

Die in den Figuren 1 bis 6 dargestellten Schaltgabeln 1 mit ihren unterschiedlich ausgeführten Aufnahmevorsprüngen 2 (Figuren 1 bis 4), 2' (Fig. 5) und 2'' (Fig. 6) sind jeweils für die Aufnahme einer Schaltschiene 3 vorgesehen, die als Rundstab ausgebildet und an der Stelle der Schaltgabel 1 mit zwei gegenüberliegenden und zueinander planparallelen Abflachungen 4 versehen ist. Die Aufnahmevorsprünge 2 und 2' gemäß den Figuren 1 bis 4 weisen jeweils zwei gegenüberliegende zueinander planparallele Führungsflächen 5 bzw. 5' auf, denen die Abflachungen 4 der Schaltschiene 3 mit geringem Bewegungsspiel anliegen. Bei der Ausführungsform gemäß Fig. 6 befinden sich die Führungsflächen 5'' an der weiter unten noch näher beschriebenen Führungsbuchse 6.

Durch die Aufnahmevorsprünge 2, 2', 2'' und durch die Schaltschiene 3 hindurch, jeweils senkrecht zu den Führungsflächen 5, 5', 5'' und zu den Abflachungen 4, ist bei jeder der in den Figuren 1 bis 6 dargestellten Ausführungsformen ein im wesentlichen zylindrischer Schwenkzapfen 7 hindurchgeführt. Im Fall des in Fig. 6 gezeigten Ausführungsbeispiels ist der Schwenkzapfen 7 zusätzlich noch durch die Führungsbuchse 6 hindurchgeführt. Der Schwenkzapfen 7 sitzt in einander entsprechenden Aufnahmebohrungen der Aufnahmevorsprünge 2, 2', 2'' und der Schaltschiene 3 sowie im Fall des Ausführungsbeispiels gemäß Fig. 6 auch der Führungsbuchse 6. Die Aufnahmebohrungen werden vorzugsweise durch eine gemeinsame Bohrung durch den jeweiligen Aufnahmevorsprung und die Schaltschiene sowie ggf. durch die Führungsbuchse 6 hergestellt.

Die Schaltgabel 1 ist in üblicher Weise nach Art eines halben Kreisrings geformt und ist an ihren Gabelenden mit Funktionsflächen, den sogenannten Patten, versehen, die in bekannter Weise mit einer (nicht dargestellten) Schaltmuffe eingreifen. Die Mittelachse des Schwenkzapfens 7 verläuft bei allen Ausführungsbeispielen durch die Mitte des erwähnten Kreisrings, wie die Figuren 1, 3, 8 und 10 verdeutlichen.

Bei allen Ausführungsformen ist die Schaltschiene durch eine Öffnung des Aufnahmevorsprungs hindurchgeführt. Bei der in den Figuren 1 bis 4 gezeigten Ausführungsform ist diese Öffnung 8, welche die beiden gegenüberliegenden Führungsflächen 5 aufweist, ein offener Schlitz, mit welchem der Aufnahmevorsprung 2 seitlich auf die Schaltschiene 3 aufgesteckt ist. Dabei ist zwischen der Endfläche 9 des Schlitzes und der ihr zugekehrten Fläche 10 der Schaltschiene 3 bei eingesetztem Schwenkzapfen 7 ein für den Ausgleich der Taumelbewegungen der Schaltmuffe ausreichender Schwenkspielabstand vorgesehen, wie in Fig. 3 durch die Maßbezugszahl 11 angedeutet und auch aus Fig. 4 ersichtlich ist.

Bei der Ausführungsform gemäß Fig. 5 ist der Aufnahmevorsprung 2' als umfänglich geschlossene Hülse ausgebildet, durch welche sich die Öffnung 8' erstreckt. Die Öffnung wird durch die gegenüberliegenden zueinander planparallelen Führungsflächen 5' und durch seitliche zylindrische Abschnitte begrenzt. Mittels der Öffnung 8' ist die Schaltgabel 1 auf die Schaltschiene 3 axial aufgeschoben. Bei dieser Ausführungsform müssen für diesen Zweck die Abflachungen 4 über die Länge der Schaltschiene 3 durchgehend ausgebildet sein oder aber der Durchmesser der Schaltschiene im Bereich des Aufnahmevorsprungs so gewählt sein, daß das Abstandsmaß der daran angebrachten Abflachungen den Durchmesser der Schaltschiene im übrigen Bereich nicht unterschreitet, um ein axiales Aufschieben der Schaltgabel 1 zu ermöglichen. Zwischen den seitlichen Wänden des hülsenförmigen Aufnahmevorsprungs 2' und den diesen jeweils zugekehrten Flächen 10 der Schaltschiene 3 ist bei eingesetztem Schwenkzapfen 7 zu beiden Seiten der Schaltschiene 3 ein durch Maßbezugszahlen 11 bezeichneter Schwenkspielabstand vorgesehen.

Das Ausführungsbeispiel gemäß Fig. 6 unterscheidet sich von den vorangehend beschriebenen hauptsächlich durch die Anordnung der Führungsbuchse 6. Hierbei ist der Aufnahmevorsprung 2'' mit einer als Zylinderbohrung ausgebildeten Öffnung 8'' versehen, mit welcher die Schaltgabel 1 auf die Schaltschiene 3 axial aufgeschoben ist. Zwischen der Wandfläche der als Zylinderbohrung ausgebildeten Öffnung 8'' und der Außenfläche der Schaltschiene 3 ist die Führungsbuchse 6 angeordnet. Diese liegt mit ihrer Außenfläche der Wandfläche der Zylinderbohrung. an und weist an ihrer Innenfläche die beiden gegenüberliegenden zueinander planparallelen Führungsflächen 5'' auf. Diese liegen den Abflachungen 4 der Führungsschiene 3 an. Der Schwenkzapfen 7 ist somit durch den Aufnahmevorsprung 2'', die Führungsbuchse 6 und die Schaltschiene 3 hindurchgeführt. Die Führungsbuchse 6 könnte abweichend von der zeichnerischen Darstellung eine hülsenförmig geschlossene Wandung aufweisen, wobei dann zwischen den seitlichen Wänden der so ausgebildeten Führungsbuchse und den diesen jeweils zugekehrten Flächen der Schaltschiene 3 bei eingesetztem Schwenkzapfen 7 zu beiden Seiten der Schaltschiene 3 ein Schwenkspielabstand vorgesehen ist. Bei dem in Fig. 6 gezeichneten Ausführungsbeispiel jedoch weist die Führungsbuchse 6 im Anschluß an die beiden zueinander planparallelen Führungsflächen 5'' nur eine seitliche Wandung auf, so daß die somit etwa C-förmige Führungsbuchse 6 von der Seite her auf die Schaltschiene 3 aufsteckbar ist. Dementsprechend ist nur auf der geschlossenen Seite der Führungsbuchse 6 bei eingesetztem Schwenkzapfen 7 zwischen der Schaltschiene 3 und der benachbarten seitlichen Wandung der Führungsbuchse 6 ein durch die Maßbezugszahl 11 bezeichneter Schwenkspielabstand vorgesehen.

Die in den Figuren 7 bis 10 dargestellten Ausführungsbeispiele verwenden jeweils eine aus Flachmaterial geschnittene Schaltschiene 3' (Figuren 7 und 8) bzw. 3'' (Figuren 9 und 10). Bei diesen beiden Ausführungsbeispielen werden übereinstimmende Schaltgabeln 1 verwendet, deren Aufnahmevorsprung 2 demjenigen im wesentlichen entspricht, der mit Bezug auf die Figuren 1 bis 4 beschrieben wurde.

Bei dem Ausführungsbeispiel nach den Figuren 7 und 8 entspricht der gegenseitige Abstand der Führungsflächen 5 des Aufnahmevorsprungs 2 etwa der Dicke des Flachmaterials der Schaltschiene 3'. Bei eingesetztem Schwenkzapfen 7, der wiederum durch einander entsprechende Aufnahmebohrungen des Aufnahmevorsprungs 2 und der Schaltschiene 3' hindurchgeführt ist, ist zwischen der Endfläche der als offener Schlitz ausgebildeten Öffnung 8 und der dieser Endfläche zugekehrten Fläche der Schaltschiene 3' wiederum ein durch die Maßbezugszahl 11 angedeuteter Schwenkspielabstand vorgesehen. Die Schaltgabel 1 ist mit ihrem Aufnahmevorsprung 2 von der Seite her auf die Schaltschiene 3' aufgesteckt, wobei die Öffnung 8 zwischen ihren Führungsflächen 5 die Schaltschiene 3 aufnimmt.

Bei dem in den Figuren 9 und 10 gezeigten Ausführungsbeispiel ist mit der Schaltschiene 3'' ein U-förmiger Bügel 12 mit den Enden seiner beiden Schenkel 13 fest verbunden, im gezeichneten Beispiel durch Schweißung. Ein die beiden Schenkel 13 des Bügels 12 miteinander verbindender Steg 14 aus einem der Schaltschiene 3'' entsprechenden Flachmaterial bildet bei diesem Ausführungsbeispiel die Angriffsstelle für den Aufnahmevorsprung 2 der Schaltgabel 1. Der Aufnahmevorsprung 2 ist mit seiner schlitzförmigen Öffnung 8 von der Seite her auf den Steg 14 aufgeschoben und damit über den Schwenkzapfen 7 schwenkbar in den Grenzen des durch die Maßbezugszahl 11 angedeuteten Schwenkspielabstands verbunden.

Wie aus den Figuren 7 und 9 hervorgeht, sind an den aus Flachmaterial geschnittenen Schaltschienen 3' bzw. 3'' die für die Funktion erforderlichen Mitnehmerflächen 15 durch entsprechende Ausschnitte unmittelbar an der Schaltschiene selbst angeordnet. Bei aus Rundstäben gebildeten Schaltschienen, wie sie mit Bezug auf die Ausführungsbeispiele gemäß den Figuren 1 bis 6 beschrieben worden sind, werden entsprechende Mitnehmerflächen in der Regel an einem zusätzlich an der Schaltschiene zu befestigenden Mitnehmer (nicht dargestellt) vorgesehen.

Stellvertretend für alle Ausführungsbeispiele ist in Fig. 4 die Verschwenkbarkeit der Schaltgabel 1 gegenüber der Schaltschiene 3 um den Schwenkzapfen 7 dadurch angedeutet, daß die Schaltgabel 1 in ihren beiden möglichen Schwenkgrenzlagen einmal in dickeren Linien und einmal in demgegenüber dünneren Linien eingezeichnet wurde. Der aus der Zeichnung ersichtliche Schwenkwinkelbetrag ist gegenüber der Realität zur Verdeutlichung übertrieben dargestellt. Bei durch Taumelbewegungen der Schaltmuffe veranlaßten Schwenkbewegungen der Schaltgabel relativ zur Schaltschiene führen die Führungsflächen 5 (bzw. 5', bzw. 5'') die um den Schwenkzapfen 7 verschwenkende Schaltgabel an der Schaltschiene 3 (bzw. 3', bzw. 3'').

Ein zur Herstellung der in verschiedenen Ausführungsbeispielen beschriebenen Anordnung aus Schaltschiene und Schaltgabel wird vorzugsweise so durchgeführt, daß die Schaltgabel auf die Schaltschiene ggf. nach Anbringung der Führungsbuchse (Fig. 6) aufgeschoben wird, worauf die Schaltschiene über die daran befindlichen Referenzflächen, d.h. Mitnehmerflächen bzw. Rastierflächen, und die Schaltgabel über die Funktionsflächen der Gabelenden ("Patten") in zueinander genau justierter Lage festgelegt werden, wonach der Schaltgabel-Aufnahmevorsprung und die Schaltschiene in dieser festgelegten Relativlage zur Bildung einer Aufnahmebohrung für den Schwenkzapfen in einem Bohrvorgang gemeinsam gebohrt werden und anschließend der Schwenkzapfen in die Aufnahmebohrung zur schwenkbaren Verbindung der Schaltgabel mit der Schaltschiene eingeschoben wird. Auf diese Weise wird eine hinsichtlich der eingangs erwähnten Toleranzanforderungen sehr maßgenaue Anordnung aus Schaltschiene und Schaltgabel erzielt. Bei der Anordnung aus Schaltschiene und Schaltgabel gemäß dem Ausführungsbeispiel nach den. Figuren 9 und 10 wird das geschilderte Verfahren prinzipiell ebenfalls angewendet, wobei anstelle der Schaltschiene der Steg des mit der Schaltschiene fest verbundenen Bügels tritt. Hierbei ist der Aufnahmevorsprung der Schaltgabel so auszubilden, wie das mit Bezug auf die Figuren 1 bis 4 und 7 bis 10 beschrieben worden ist.

Vorgeschlagen wird eine nur geringe Fertigungstoleranzen aufweisende und eine Übertragung von Schwingungen in das Schaltgestänge vermeidende Anordnung aus Schaltschiene und Schaltgabel sowie ein zur Herstellung derselben besonders geeignetes Verfahren. Bei dieser Anordnung aus Schaltschiene und Schaltgabel nimmt ein Aufnahmevorsprung der Schaltgabel die Schaltschiene verschwenkbar auf, wobei die Schaltgabel durch zwei gegenüberliegende zueinander planparallele Führungsflächen einer Öffnung des Aufnahmevorsprungs an der Schaltschiene geführt wird. Ein Schwenkzapfen ist hierbei sowohl durch den Aufnahmevorsprung als auch durch die Schaltschiene hindurchgeführt, wobei die Aufnahmebohrung für den Schwenkzapfen vorzugsweise durch gemeinsames Bohren von Aufnahmevorsprung und Schaltschiene in einem Bohrvorgang gebildet ist.

## Patentansprüche

1. Schaltschiene (3, 3', 3") mit daran befestigter Schaltgabel (1) für Kraftfahrzeug-Schaltgetriebe, **dadurch gekennzeichnet, dass** die Schaltgabel (1) und die Schaltschiene (3, 3', 3'') durch einen rechtwinklig zur Schaltschienenachse gerichteten Schwenkzapfen (7) in Richtung der Schaltschienenachse relativ zueinander unverschiebbar festgelegt sind, jedoch die Schaltgabel (1) um den Schwenkzapfen (7) um einen geringen Winkelbetrag relativ zur Schaltschiene (3, 3', 3'') verschwenkbar ist, wobei an die Schaltgabel (1) ein Aufnahmevorsprung (2, 2', 2'') für die Aufnahme der Schaltschiene (3, 3', 3'') angeformt ist, der eine Öffnung (8, 8', 8'') mit zwei gegenüberliegenden zueinander planparallelen Führungsflächen (5, 5', 5'') aufweist, welche die Schaltgabel (1) verschwenkbar um den durch den Aufnahmevorsprung (2, 2', 2'') senkrecht zu den Führungsflächen (5, 5', 5'') und durch die Schaltschiene (3, 3', 3'') hindurchgeführten Schwenkzapfen (7) an der Schaltschiene (3, 3', 3'') führen.

2. Schaltschiene mit daran befestigter Schaltgabel nach Anspruch 1, wobei die Öffnung (8) des Aufnahmevorsprungs (2) ein offener Schlitz ist, mit welchem der Aufnahmevorsprung (2) seitlich auf die Schaltschiene (3) aufgesteckt ist, wobei zwischen der Endfläche (9) des Schlitzes und der ihr zugekehrten Fläche (10) der Schaltschiene (3) bei eingesetztem Schwenkzapfen (7) ein Schwenkspielabstand (11) vorgesehen ist.

3. Schaltschiene mit daran befestigter Schaltgabel nach Anspruch 1, wobei der Aufnahmevorsprung (2')als umfänglich geschlossene Hülse ausgebildet ist, durch welche sich die Öffnung (8') erstreckt, mit welcher die Schaltgabel (1) auf die Schaltschiene (3) axial aufgeschoben ist, wobei zwischen den seitlichen Wänden des hülsenförmigen Aufnahmevorsprungs (2') und den diesen jeweils zugekehrten Flächen der Schaltschiene (3) bei eingesetztem Schwenkzapfen (7) zu beiden Seiten der Schaltschiene (3) ein Schwenkspielabstand (11) vorgesehen ist.

4. Schaltschiene mit daran befestigter Schaltgabel nach Anspruch 1, wobei der Aufnahmevorsprung (2'') mit einer als Zylinderbohrung ausgebildeten Öffnung (8'') versehen ist, mit welcher die Schaltgabel (1) auf die Schaltschiene (3) axial aufgeschoben ist, wobei zwischen der Wandfläche der Zylinderbohrung und der Außenfläche der Schaltschiene eine Führungsbuchse (6) angeordnet ist, die mit ihrer Außenfläche der Wandfläche der Zylinderbohrung anliegt und an ihrer Innenfläche die beiden gegenüberliegenden zueinander planparallelen Führungsflächen (5'') aufweist, wobei der Schwenkzapfen (7) durch den Aufnahmevorsprung (2''), die Führungsbuchse (6) und die Schaltschiene (3) hindurchgeführt ist, und wobei zwischen den seitlichen Wänden der Führungsbuchse und den diesen jeweils zugekehrten Flächen der Schaltschiene bei eingesetztem Schwenkzapfen (7) zu beiden Seiten der Schaltschiene ein Schwenkspielabstand (11) vorgesehen ist.

5. Schaltschiene mit daran befestigter Schaltgabel nach Anspruch 4, wobei die Führungsbuchse (6) im Anschluß an die beiden zueinander planparallelen Führungsflächen (5'') nur eine seitliche Wandung aufweist, so daß die etwa C-förmige Führungsbuchse (6) seitlich auf die Schaltschiene (3) aufsteckbar ist.

6. Schaltschiene mit daran befestigter Schaltgabel nach einem der vorhergehenden Ansprüche, wobei die Schaltschiene (3) als Rundstab ausgebildet und an der Stelle der Schaltgabel (1) mit zwei gegenüberliegenden Abflachungen (4) versehen ist, welche den Führungsflächen (5, 5', 5'') an der Schaltgabel (1) anliegen.

7. Schaltschiene mit daran befestigter Schaltgabel nach einem der Ansprüche 1 bis 5, wobei die Schaltschiene (3', 3'') aus Flachmaterial geschnitten ist und der gegenseitige Abstand der Führungsflächen (5) an der Schaltgabel (1) etwa der Dicke des Flachmaterials entspricht.

8. Schaltschiene mit daran befestigter Schaltgabel nach Anspruch 2, wobei mit der Schaltschiene (3'') ein U-förmiger Bügel (12) mit den Enden seiner beiden Schenkel (13) fest verbunden ist, und wobei der Aufnahmevorsprung (2) der Schaltgabel (1) den Steg (14) des Bügels (12) aufnimmt.

9. Verfahren zur Herstellung einer Schaltschiene mit daran befestigter Schaltgabel nach einem der vorhergehenden Ansprüche, wobei die Schaltgabel auf die Schaltschiene unmittelbar oder nach Anbringung der Führungsbuchse aufgeschoben wird, worauf die Schaltschiene über daran befindliche Referenzflächen und die Schaltgabel über die Funktionsflächen der Gabelenden in zueinander genau justierter Lage festgelegt werden, wonach Schaltgabel-Aufnahmevorsprung und Schaltschiene in dieser festgelegten Relativlage zur Bildung einer Aufnahmebohrung für den Schwenkzapfen in einem Bohrvorgang gemeinsam gebohrt werden und anschließend der Schwenkzapfen in die Aufnahmebohrung zur schwenkbaren Verbindung der Schaltgabel mit der Schaltschiene eingeschoben wird.

## Claims

1. Gear shift rail (3, 3', 3") with a gear shift fork (1) fixed thereto for motor vehicle gearboxes, **characterized in that** the gear shift fork (1) and the gear shift rail (3, 3', 3") are non-displaceably fixed relative to one another in the direction of the gear shift rail axis by a trunnion (7) directed at right angles to said gear shift rail axis, but the gear shift fork (1) is pivotable about the trunnion (7) by a small angle relative to the gear shift rail (3, 3', 3"), a reception projection (2, 2', 2") for receiving the gear shift rail 3, 3', 3") being shaped onto the gear shift fork and which has an opening (8, 8', 8") with two facing, plane-parallel guide surfaces (5, 5', 5"), which guide the gear shift fork (1) pivotably on the gear shift rail (3, 3', 3") about the trunnion (7) passed through the reception projection (2, 2', 2") perpendicular to the guide surfaces (5, 5', 5") and through the gear shift rail (3, 3', 3").

2. Gear shift rail with gear shift fork fixed thereto according to claim 1, the opening (8) of the reception projection (2) being an open slot with which the reception projection (2) is mounted laterally on the gear shift rail (3) and between the end face (9) of the slot and the face (10) of the gear shift rail (3) facing the same when the trunnion (7) is inserted, a pivoting clearance spacing (11) is provided.

3. Gear shift rail with gear shift fork fixed thereto according to claim 1, the reception projection (2') being constructed as a circumferentially closed sleeve through which extends the opening (8') with which the gear shift fork (1) is axially engaged on the gear shift rail (3) and between the lateral walls of the sleeve-like reception projection (2') and the facing faces of the gear shift rail (3) in each case facing the same with the trunnion (7) inserted a pivoting clearance spacing (11) is provided on both sides of the gear shift rail (3).

4. Gear shift rail with gear shift fork fixed thereto according to claim 1, the reception projection (2") being provided with an opening (8") constructed as a cylinder bore and which the gear shift fork (1) is axially engaged on the gear shift rail (3), a guide bush (6) being positioned between the wall face of the cylinder bore and the outer face of the gear shift rail and the outer face thereof engages on the wall face of the cylinder bore and has on its inner face the two facing, plane-parallel guide surfaces (5"), the trunnion (7) being passed through the reception projection (2"), the guide bush (6) and the gear shift rail (3), a pivoting clearance spacing (11) being provided between the lateral walls of the guide bush and the faces of the gear shift rail in each case facing the same when the trunnion (7) is inserted and on both sides of the gear shift rail.

5. Gear shift rail with gear shift fork fixed thereto according to claim 4, the guide bush (6) only having one lateral wall following on to the two mutually plane-parallel guide surfaces (5"), so that the approximately C-shaped guide bush (6) can be engaged laterally on the gear shift rail (3).

6. Gear shift rail with gear shift fork fixed thereto according to one of the preceding claims, the gear shift rail (3) being constructed as a round bar and is provided at the location of the gear shift fork (1) with two facing flattenings (4), which lie against the guide surfaces (5, 5', 5") on the gear shift fork (1).

7. Gear shift rail with gear shift fork fixed thereto according to one of the claims 1 to 5, the gear shift rail (3', 3") being cut from flat material and the mutual spacing of the guide surfaces (5) on the gear shift fork (1) roughly corresponding to the thickness of the flat material.

8. Gear shift rail with gear shift fork fixed thereto according to claim 2, the ends of the two legs (13) of a U-shaped clip (12) being firmly connected to the gear shift rail (3") and the reception projection (2) of the gear shift fork (1) receives the crossmember (14) of the clip (12).

9. Method for the manufacture of a gear shift rail with gear shift fork fixed thereto according to one of the preceding claims, the gear shift fork being engaged on the gear shift rail either directly or following the fitting of the guide bush, the gear shift rail by means of reference surfaces located therein and the guide shift fork by means of the functional surfaces of the fork ends being fixed in a precisely set mutual position, the gear shift fork reception projection and gear shift rail in said fixed relative position then being jointly drilled in a drilling process for forming a reception bore for the trunnion, after which the trunnion is inserted in the reception bore for the pivotable connection of the gear shift fork to the gear shift rail.

## Revendications

1. Arbre de commande (3, 3', 3") avec une fourchette de commande (1) fixée sur celui-ci, pour une transmission de véhicule automobile, **caractérisé en ce que** la fourchette de commande (1) et l'arbre de commande (3, 3', 3") sont immobilisés l'un par rapport à l'autre sans possibilité de déplacement en direction de l'axe de l'arbre de commande au moyen d'un tenon de pivot (7) orienté à angle droit par rapport à l'axe de l'arbre de commande, mais de telle sorte que la fourchette de commande (1) est capable de pivoter autour du tenon de pivot (7) sur une faible plage angulaire par rapport à l'arbre de commande (3, 3', 3"), une saillie de réception (2, 2', 2") étant formée sur la fourchette de commande (1) pour la réception de l'arbre de commande (3, 3', 3"), ladite saillie présentant une ouverture (8, 8', 8") avec deux surfaces de guidage opposées (5, 5', 5") planes et mutuellement parallèles, lesquelles guident la fourchette de commande (1) sur l'arbre de commande (3, 3', 3") en pivotement autour du tenon de pivot (7) mené à travers la saillie de réception (2, 2', 2") perpendiculairement aux surfaces de guidage (5, 5', 5") et à travers l'arbre de commande (3, 3', 3").

2. Arbre de commande avec une fourchette de commande fixée sur celui-ci, selon la revendication 1, dans lequel l'ouverture (8) de la saillie de réception (2) est une fente ouverte au moyen de laquelle la saillie de réception (2) est enfilée latéralement sur l'arbre de commande (3), un jeu de pivotement (11) étant prévu entre la surface terminale (9) de la fente et la surface (10) de l'arbre de commande (3) tournée vers celle-ci, lorsque que le tenon de pivot (7) est mis en place.

3. Arbre de commande avec une fourchette de commande fixée sur celui-ci, selon la revendication 1, dans lequel la saillie de réception (2') est réalisée sous forme d'une douille refermée sur sa périphérie, à travers laquelle s'étend l'ouverture (8') au moyen de laquelle la fourchette de commande (1) est enfilée axialement sur l'arbre de commande (3), un jeu de pivotement (11) étant prévu entre les parois latérales de la saillie de réception (2') en forme de douille et les surfaces de l'arbre de commande (3) respectivement tournées vers lesdites parois, lorsque le tenon de pivot (7) est mis en place, et sur les deux côtés de l'arbre de commande (3).

4. Arbre de commande avec une fourchette de commande fixée sur celui-ci, selon la revendication 1, dans lequel la saillie de réception (2") est dotée d'une ouverture (8") réalisée sous forme de perçage cylindrique au moyen duquel la fourchette de commande (1) est enfilée axialement sur l'arbre de commande (3), une douille de guidage (6) étant agencée entre la surface de paroi du perçage cylindrique et la surface extérieure de l'arbre de commande, douille qui s'applique par sa surface extérieure contre la surface de paroi du perçage cylindrique et qui présente à sa surface intérieure les deux surfaces de guidage (5") opposées, planes et parallèles l'une à l'autre, le tenon de pivot (7) étant passé à travers la saillie de réception (2"), la douille de guidage (6), et l'arbre de commande (3), et il est prévu un jeu de pivotement (11) entre les parois latérales de la douille de guidage et les surfaces de l'arbre de commande respectivement tournées vers ces parois, lorsque le tenon de pivotement (7) est mis en place, et sur les deux côtés de l'arbre de commande.

5. Arbre de commande avec une fourchette de commande fixée sur celui-ci, selon la revendication 4, dans lequel la douille de guidage (6) comporte, à la suite des deux surfaces de guidage (5") planes mutuellement parallèles, une seule paroi latérale, de sorte que la douille de guidage (6) présentant approximativement une forme en C est susceptible d'être enfilée latéralement sur l'arbre de commande (3).

6. Arbre de commande avec une fourchette de commande fixée sur celui-ci, selon l'une des revendications précédentes, dans lequel l'arbre de commande (3) est réalisé sous forme de barre ronde, et est pourvu de deux méplats opposés (4) à l'emplacement de la fourchette de commande (1), ces méplats étant appliqués contre les surfaces de guidage (5, 5', 5") sur la fourchette de commande (1).

7. Arbre de commande avec une fourchette de commande fixée sur celui-ci, selon l'une des revendications 1 à 5, dans lequel l'arbre de commande (3', 3") est découpé à partir d'un matériau plat, et la distance mutuelle des surfaces de guidage (5) sur la fourchette de commande (1) correspond approximativement à l'épaisseur du matériau plat.

8. Arbre de commande avec une fourchette de commande fixée sur celui-ci, selon la revendication 2, dans lequel un étrier en forme de U (12) est fermement relié à l'arbre de commande (3") au moyen des extrémités de ses deux branches (13), et la saillie de réception (2) de la fourchette de commande (1) reçoit l'âme (14) de l'étrier (12).

9. Procédé pour réaliser un arbre de commande avec une fourchette de commande fixée sur celui-ci, selon l'une des revendications précédentes, dans lequel la fourchette de commande est enfilée sur l'arbre de commande soit directement soit après montage de la douille de guidage, suite à quoi l'arbre de commande - par l'intermédiaire de surfaces de référence prévues sur celui-ci - et la fourchette de commande - par l'intermédiaire de surfaces fonctionnelles aux extrémités de la fourchette - sont fixés dans une position exactement ajustée l'un par rapport à l'autre, suite à quoi la saillie de réception de la fourchette de commande et l'arbre de commande sont conjointement percés en une opération de perçage, dans cette position relative immobilisée, pour réaliser un perçage de réception pour le tenon de pivot, et le tenon de pivot est ensuite introduit dans le perçage de réception pour établir une liaison en pivotement de la fourchette de commande avec l'arbre de commande.
